Europäisches Patentamt

(19) European Patent Office

Office européen des brevets

(11) Publication number: **0 017 637**

**A1**

(12) # EUROPEAN PATENT APPLICATION

(21) Application number: **80850038.3**

(22) Date of filing: **26.03.80**

(51) Int. Cl.³: **B 65 G 21/06**
**B 65 G 21/20**

(30) Priority: **26.03.79 SE 7902693**

(43) Date of publication of application:
**15.10.80 Bulletin 80/21**

(84) Designated Contracting States:
**BE DE FR GB IT NL SE**

(71) Applicant: **Bulten-Kanthal AB**

**S-743 01 Hallstahammar(SE)**

(72) Inventor: **Johansson, Lars-Jörgen**
**Nyzellsgatan 2 F**
**S-633 41 Eskilstuna(SE)**

(74) Representative: **Moberg, Sture V (SE)**
**Sture V Moberg AB Kungstensgatan 48**
**S-113 59 Stockholm(SE)**

(54) **Conveyor.**

(57) A conveyor comprising an endless chain (15) which runs on slide ribs (26, 27) and is guided by lateral guide profiles (13, 14) carried by cross-bridges (40) which are mutually spaced longitudinally of the conveyor. Each crossbridge comprises an uppermost bridge portion (10A) and a lowermost bridge portion (10B), which may be clamped together to receive and clamp the lateral guide profiles between them. To afford a simple design and easy mounting the uppermost bridge portions (10A) have a lateral chamfer (16, 17) at the lower edge, whereas the lowermost bridge portions (10B) are provided with upstanding edge flanges (18, 19), so that slots are formed between the lateral chamfers and the edge flanges. These slots are adapted to receive obliquely inwardly-downwardly directed tongues (20, 21) of the lateral guide profiles (13, 14) will be clamped to the cross-bridges, as these components are clamped together.

./...

EP 0 017 637 A1

FIG. 1

Conveyor.

The present invention relates to a conveyor, comprising and endless chain, preferably with the links designed as so called universal joint links, and the necessary drive- and guide means for the chain.

The object of the invention has been to provide a conveyor of the indicated kind which is simple and comparatively inexpensive in manufacture but nevertheless is highly reliable in operation. Another object of the invention has been to provide a conveyor of the indicated type which comprises a small number of components and is easily adaptable to requirements in each particular case.

To meet the above mentioned requirements the conveyor according to the present invention has been designed so as is defined in principle is the characterizing clause of claim 1.

Advantageous modifications and alterations as to details are defined in the subclaims and in the following specification with reference to the embodiments as shown in the drawing.

The invention will be disclosed in more detail below with reference to the accompanying drawings.

Fig. 1 is a cross- section of one embodiment of the conveyor according to the invention, chosen as example;

Fig. 2 is a cross-section of a second embodiment of the convenyor according to the invention, designed with a return path for the conveyor chain;

Fig. 3 is a perspective view of an alternative rail arrangement.

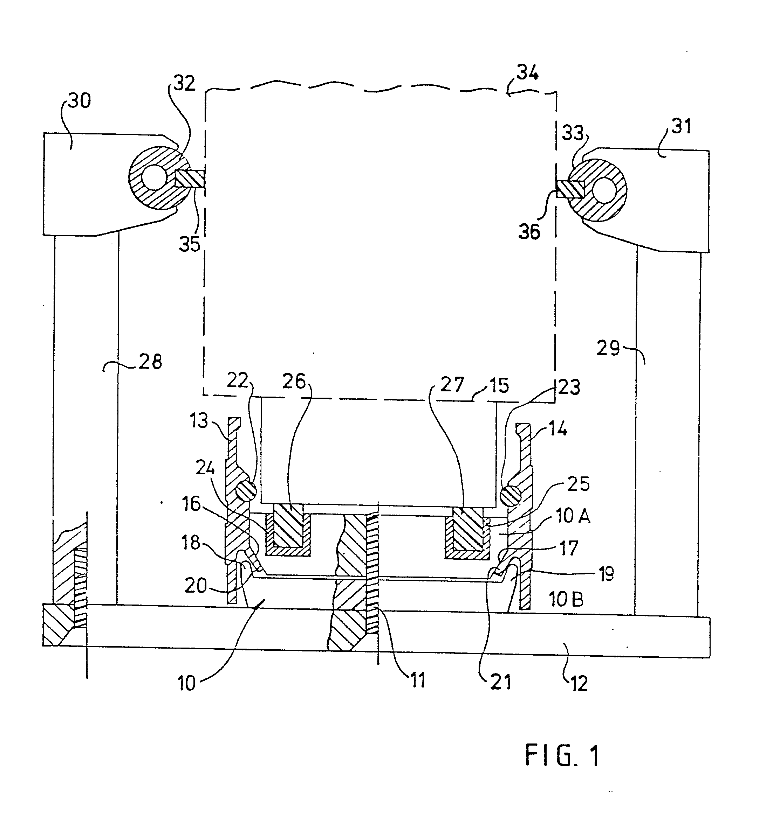

The conveyor of Fig. 1 comprises a plurality of cross-bridges, generally denoted 10, which are suitably spaced from each other longitudinally of the conveyor. Each cross-bridge 10 comprises an uppermost bridge portion 10A and a lowermost bridge portion 10B which are clamped together by means of a screw 11, which is inserted from below and which, in the instant case, also secures the bridge 10 to a crossrunning bracket 12.

The bridges 10 carry longitudinal lateral guide profiles 13,14 for a diagrammatically shown conveyor chain 15 which is preferably designed as a so called universal joint chain to easily permit bending both in the vertical plane and the horizontal plane. Because of the requirements for quiet running and easy cleaning etc. the chain preferably consists essentially of nylon or a similar material.

The uppermost bridge portions 10A have, at the lower edges, a side chamfer 16 and 17, respectively, and the lowermost bridge portions 10B have upstanding edge flanges 18 and 19, respectively, whereby there, between the side chamfers and the edge flanges, are formed slots wherein longitudinal obliquely inwardly and downwardly directed tongues 20 and 21 of the profiles 13 and 14 protrude in a manner such that the profiles will be clamped to the cross-bridges 10 as the screws 11 are tightened. The inner sides of the lateral guide profiles 13, 14 are provided with grooves to receive guide strips 22 and 23, respectively, of a low friction material, such as a suitable plastic material, for instance.

The uppermost bridge portions 10A have at the ends, i.e. comperatively close to the guide profiles 13, 14, recesses wherein longitudinal U-profiles 24, 25 are fitted. These profiles carry slide rails 26, 27, for instance of rectangular cross-section and consisting e.g. of plastic, on which rails the chain 15 is running.

To the ends of the bracket 12 there are affixed posts 28, 29 which by means of suitable clamps 30, 31 carry longitudinal side bars 32, 33 for the transport goods 34. The bars 32, 33 may suitably be provided with support ribs 35, 36, e.g. of a suitable plastic material.

It should be noted that the clamps 30, 31 are preferably pivotally arranged on the posts 28, 29. In such a case it is very easy to vary the distance between the bars 32, 33 to adapt that distance to the particular transport goods 34 in each case, viz. simply in that the brackets 12 are adjusted into varying angular positions in relation to the longitudinal direction of the conveyor whereby, of course, the distance between the bars 32, 33 will be varied whereas their orientation longitudinally of the conveyor remains unchanged.

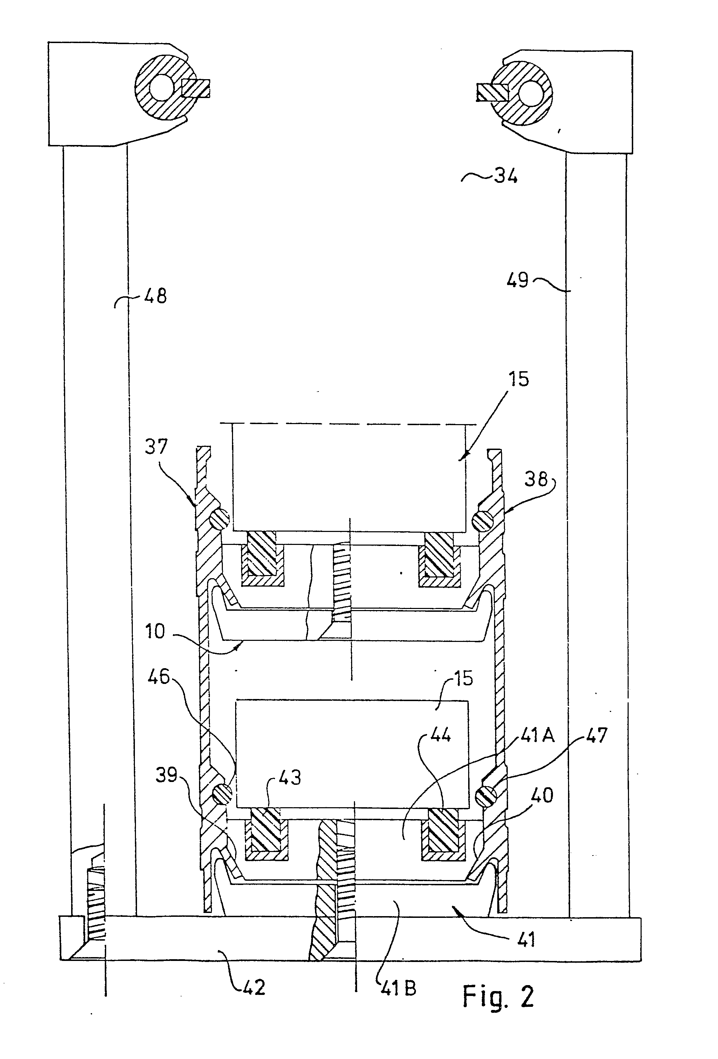

In principle the embodiment of fig. 2 is very similar to the one as shown in fig. 1. However, in the embodiment of fig. 2 the cross-bridges 10 are not secured to the bracket 12. Instead, the lateral guide profiles, generally denoted 37 and 38, respectively, in this case are extended downwardly and at the lowermost edges provided with profiles similar in shape to the profile at the uppermost egde, viz. with downwardly and inwardly directed tongues 39, 40 which are clamped between uppermost and lowermost bridge portions 41A and 41B, respectively, of lower cross-bridge, generally denoted 41, which in turn is secured to a bracket 42, corresponding to the bracket 12 of fig. 1.

Like the uppermost bridges 10 the lowermost cross-bridges 41 are provided with mutually parallel slide ribs 43, 44 for the return part of the chain 15, and the profiles 37, 38 are inwardly provided with support ribs 46, 47, similar to the ribs 22, 23 for lateral guiding of the return part of the chain 15. In this embodiment the posts 48, 49 are slightly lengthened as compared to the posts 28, 29 of fig. 1 in order that they shall extend up to the required level to reliably guide the transport goods. 34.

In both embodiments the slide ribs 26, 27 and 43, 44, respectively, will be clamped to the uppermost bridge portions 10A, and 41A, respectively, as the screws 11 are tightened, viz. due to the fact that the chamfers 16, 17 slide along the obliquely inwardly and downwarly directed tongues 20, 21 and 39, 40, respectively. Therefore, no separate clamping means for the slide ribs 26, 27 and 43, 44, respectively, are required.

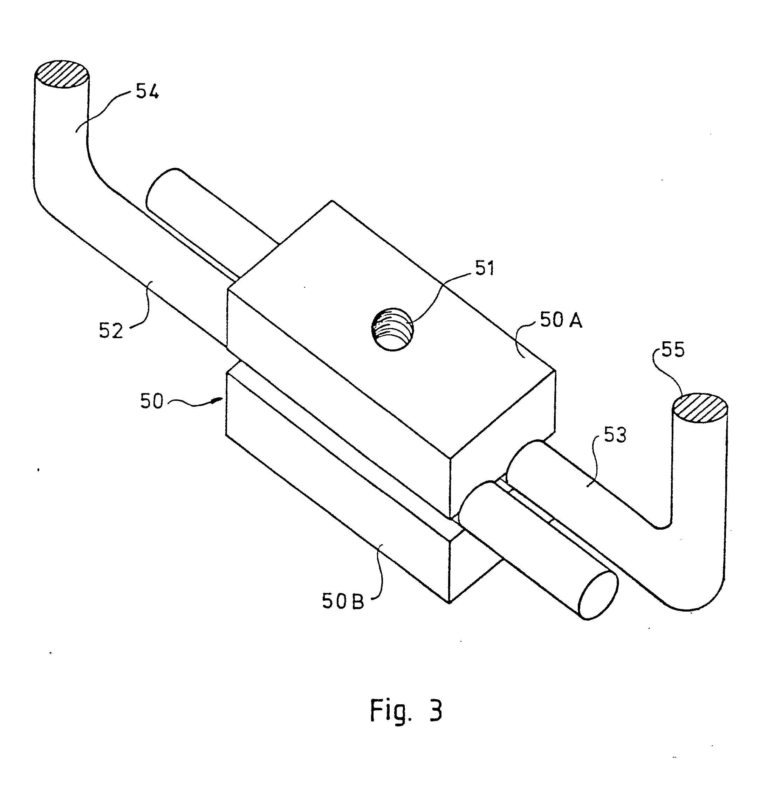

In the embodiment of fig. 3 the brackets 12 and 42, respectively, of the embodiments of fig. 1 and 2, have been replaced by a clamping means, generally denoted 50. This one comprises two blocks 50A and 50B which may be clamped together by means of a screw, not shown, which passes through the screw hole 51 and which is also used to secure the cross-bridges 10 and 41, respectively. The blocks 50A, 50B have, in their mutually facing surfaces, two parallel grooves to receive horizontal shanks 52, 53 of vertical posts 54, 55, which last mentioned correspond to the posts 28, 29 and 48, respectively, of the embodiments of figs. 1 and 2. It will be realized that in this case it is easy to vary the distance between the bars, not shown, on the posts 54, 55, simply by a corresponding displacement of the shanks 52, 53 in their grooves. If desired, it is possible to simultaneously change the orientation of the posts 54, 55 simply by turning the shanks 52, 53 in their grooves.

Most of the components of the conveyor according to the invention are preferably manufactured from extruded aluminum which is a material that is extremely well suited to most applications. Because of the requirements to low friction and quite running the slide and guide ribs as well as the essential portions of the conveyor chain 15 are preferably manufactured from a suitable plastic material, such as nylon. Thereby, due to the low friction, the transport goods in many cases may be kept standing, such as in filling stations, operational stations stand-by positions etc, without detrimental effect to the transport goods or the packing material.

It should be realized that the conveyor according to the invention may be built up from an extremely low number of components which may be easily put together to adapt the conveyor to the actual requirements in each particular case. It should also be realized that the conveyor according to the invention, due to the "open" design thereof, is extremely well suited to such spaces where the hygiene requirements are very great or where otherwise fouling due to dust or the like easily is conceivable.

A plurality of modifications and alterations as to details may be carried out within the scope of the inventive idea.

Claims.

1. A conveyor comprising and endless chain (15) which runs on slide ribs (26, 27) and is laterally guided by means of lateral guide profiles (13, 14), the slide ribs and the lateral guide profiles being carried by cross-bridges (10) which are mutually spaced longitudinally of the conveyor, c h a r a c - t e r i z e d   i n   that each cross-bridge comprises an uppermost bridge portion (10A) and a lowermost bridge portion (10B) which may be clamped together in order to receive and clamp between them portions of the respective lateral guide profile.

2. A conveyor according to claim 1, c h a r a c t e r - i z e d   i n   that the uppermost and lowermost bridge portions (10A, 10B) are designed to rest against each other at the ends thereof in such a manner that the uppermost bridge portion (10A) will be slightly bent and within itself clamps one or more slide ribs (26, 27) as the bridge portions (10A, 10B) are clamped together by means of a central screw (11).

3. A conveyor according to claim 1 or claim 2, c h a r a c - t e r i z e d   i n   that the uppermost bridge portions (10A), at the lower edges, are provided with a lateral chamfer (16, 17) whereas the lowermost bridge portions (10B) are provided with upstanding edge flanges (18, 19), whereby there between the lateral chamfers and the edge flanges are formed slots, into which longitudinal, obliquely inwardly and downwardly directed tongues (20, 21) of the lateral guide profiles (13, 14) are insertable, so that the lateral guide profiles (13, 14) are clamped to the cross-bridges as these components are clamped together.

0017637

FIG. 1

Fig. 2

Fig. 3

0017637

European Patent
Office

EUROPEAN SEARCH REPORT

Application number

EP 80 85 0038

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| X | FR - A - 2 392 902 (STORK BEPAK) <br> * Page 2, lines 31-37; page 3, lines 1-22; figures 1-4 * <br><br> ---- | 1-3 | B 65 G 21/06 <br> 21/20 |

TECHNICAL FIELDS
SEARCHED (Int.Cl. ³)

B 65 G

CATEGORY OF
CITED DOCUMENTS

X: particularly relevant

A: technological background

O: non-written disclosure

P: intermediate document

T: theory or principle underlying
the invention

E: conflicting application

D: document cited in the
application

L: citation for other reasons

&: member of the same patent
family,
corresponding document

The present search report has been drawn up for all claims

| Place of search | Date of completion of the search | Examiner |
|---|---|---|
| The Hague | 27-06-1980 | OSTIJN |

EPO Form 1503.1  06.78